# EUROPEAN PATENT SPECIFICATION

(11) **EP 3 835 091 B1**
(45) Date of publication and mention of the grant of the patent: **21.12.2022**
(21) Application number: 20211672.9
(22) Date of filing: 03.12.2020
(51) Int. Cl.: B60C 25/00, B60C 13/04, B60C 23/20, B60C 7/14, B60C 19/00

(54) **COLOR-CHANGING TIRE ACCORDANT WITH EXTERNAL CONDITIONS**
UNTER ÄUSSEREN EINFLÜSSEN FARBVERÄNDERNDER REIFEN
PNEUMATIQUE CHANGEANT DE COULEUR SUIVANT DES CONDITIONS EXTERIEURS

(30) Priority: 12.12.2019 KR 20190165512
(43) Date of publication of application: 16.06.2021
(73) Proprietor: HANKOOK TIRE & TECHNOLOGY CO., LTD, Gangnam-gu Seoul 06133 (KR)
(72) Inventor: Eom, Jae Ho, 34127 Daejeon (KR)
(74) Representative: Petraz, Gilberto Luigi

(56) References cited:
- EP-A1- 3 543 036
- WO-A1-2015/194989
- JP-A- H08 156 501
- KR-B1- 100 771 685

## Description

### BACKGROUND OF THE INVENTION

### 1. Field of the Invention

The present invention relates to a tire capable of changing color according to the external environment. More particularly, the invention relates to a tire that includes a color-changing part comprising a pigment mixture in one or more of a tread part, a sidewall part, and a spoke part of the tire and is capable of changing color according to the changes in the external environment so as to facilitate the maintenance of the tire.

### 2. Description of the Related Art

Tires formed of rubber-based materials have a problem that the tires can be damaged and deteriorated by the heat generated by repeated friction with the road surface, external light, and the like. Since tires have a color that readily absorbs light, there is a problem that tires are more labile to heat and ultraviolet radiation.

Since deteriorated and damaged tires cause safety accidents in a case in which the tires are broken during car driving, it is important to check in advance the condition of the tires and exchange the tires for the purpose of preventing safety accidents.

On the other hand, even in the case of maintaining spare tires other than the tires in use, when the tires are maintained at low temperature, cracks are easily generated in the tires, and when the tires are maintained at high temperature, there is a high possibility of discoloration and deformation of the tires, and the shelf life of the tires may be shortened. Thus, it is necessary to maintain tires in a preferable maintenance environment.

In order to solve these problems, manufactured products equipped with an indicator part that shows an indication according to the change in the temperature of the tire surface have been developed; however, under the current circumstances, the development of technologies that can detect temperature and light and instantaneously present information on various conditions of the tire are not in sufficient progress.

Since general pneumatic tires have a monochromatic black color, tires have been hardly considered as a part that produces an esthetic impression as compared to the main body of the car where the tires are applied, and it has been unfeasible to apply modifications such as changing the color of the tire while satisfying the basic physical properties of tire rubber and maintaining the performance of the tire.

Meanwhile, in recent years, non-pneumatic tires have been developed as environmentally friendly tires that are produced by utilizing a single material for the entirety of a tire. As those parts that are filled with air, support the weight load, and absorb shock in pneumatic tires are formed as structural supports called spoke, a variety of materials including polymers such as polyurethane can be used in addition to rubber, and accordingly, various colors can be introduced into tires.

Furthermore, even in the case of non-pneumatic tires formed of various materials, since the tires can undergo deformation or deterioration caused by external temperature or light, and there is a possibility that such deformation or deterioration may cause serious accidents during driving, currently there is an urgent demand for research on technologies by which the condition of a non-pneumatic tire can be sustainedly checked.

Document JP H08 156501 A describes a tire wheel. Document KR 100 771 685 B1 describes a tire sidewall rubber composition. Document EP 3 543 036 A1 describes a non-pneumatic tire and two-wheeled vehicle. Document WO 2015/194989 A1 describes a racing tire with heat indicator.

Therefore, it is the current situation that there is a demand to develop technologies for realizing a tire having various colors in order to apply the increasingly diversified needs of users and the various visual effects brought by colors to tires.

### SUMMARY OF THE INVENTION

An object of the present invention is to provide a tire which allows visual inspection of color changes with naked eyes from the outside of the tire so that any change in the external environment that can cause shortening of the shelf life and abnormal conditions of the tire, such as temperature and light, can be recognized; which makes the maintenance of the tire easy; and which can prevent in advance any safety accidents possibly caused by damage and deterioration of the tire.

It is another object of the present invention to provide a tire that enables easy maintenance by consumers by making the condition of the tire easily recognizable with color visibility and has an effect that can increase the shelf life of the tire.

It is still another object of the present invention to provide a tire that can produce an esthetic impression to consumers in accordance with the color change in the tire.

The present invention provides a tire according to annexed claim 1. Other advantageous features are defined in annexed claims 2 to 5.

The present invention enables observation of color changes with naked eyes from the outside of the tire so that any change in the external environment, such as temperature and light, which can cause shortening of the shelf life or abnormal condition of the tire, can be recognized, and thereby the invention has effects of making the maintenance of the tire easier and preventing in advance any safety accidents caused by damage and deterioration of the tire.

The present invention also has effects that easy maintenance by consumers is enabled by allowing the consumers to readily recognize the condition of the tire through a color change according to the change in the external environment, and the shelf life of the tire can be increased.

The present invention also has an effect of producing an esthetic impression to consumers as a result of changes in the color of the tire.

### BRIEF DESCRIPTION OF THE DRAWINGS

FIG. 1 is a schematic diagram showing the results of an experiment obtained by varying temperature, ultraviolet radiation, and light in a sticker specimen produced using a dye mixture including a temperature-sensitive dye, an ultraviolet-sensitive dye, and a photoluminescent dye at a mixing ratio of 30:35:35 (% by weight).
FIG. 2 is a schematic diagram showing a color change occurred in a tire according to an embodiment of the present invention, due to a change in the external temperature.
FIG. 3 is a schematic diagram showing a color change occurred in a tire according to another embodiment of the present invention, due to a change in the external light.

### DETAILED DESCRIPTION OF THE PREFERRED EMBODIMENTS

Hereinafter, various embodiments of the present invention will be described in detail so that those ordinarily skilled in the art to which the present invention is pertained can easily carry out the present invention; however, these are only examples given for illustrative purposes, and the scope of the present invention is not intended to be limited to the following contents.

The tire according to the present invention, which is capable of changing color according to the external environment, includes a pigment mixture that changes color with a change in temperature and/or light, one or more of a tread part, a sidewall part, and a spoke part of the tire include a color-changing part comprising the pigment mixture, and the pigment mixture includes two or more selected from the group consisting of a temperature-sensitive pigment, a light-sensitive pigment, and a photoluminescent pigment.

The present invention includes a pigment mixture that can change color with a change in temperature and light so that the tire can detect the temperature and light most significantly affecting the damage and deterioration of the tire and undergoes a color change, and the information on the condition of the tire can be provided instantaneously to the user.

The pigment mixture is configured such that any change in the temperature and/or light of the external environment can be recognized with naked eyes, by including two or more selected from the group consisting of a temperature-sensitive pigment, a light-sensitive pigment, and a photoluminescent pigment.

Specifically, regarding the temperature-sensitive pigment, any pigment that is capable of changing color according to the temperature change can be used without any particular limitations. More particularly, it is also possible to use an irreversible temperature-sensitive pigment that when exposed to a particular temperature and undergoes a color change, does not change color anymore and maintains the color, and it is also possible to use a reversible temperature-sensitive pigment that after being exposed to a particular temperature and undergoing a color change, undergoes a color change again depending on the temperature change.

Preferably, a reversible temperature-sensitive pigment can be used so that the color-changing part can detect all temperature changes at low temperatures and high temperatures, and the information on the condition of the tire not only during the use of the tire but also during the storage of the tire can be provided.

The temperature-sensitive pigment undergoes a color change at the temperature defined for each pigment, and according to the present invention, any temperature-sensitive pigment can be used without particular limitations as long as the color change temperature of the temperature-sensitive pigment is in the range of -10°C to 60°C.

At low temperatures, there is a high possibility that cracks may be generated in the tire, and at high temperatures, there may occur a problem that the tire undergoes discoloration or deformation, or the tire goes flat. If necessary, it is also possible to use a mixture obtained by mixing temperature-sensitive pigments that undergo a color change at different temperatures.

In a case in which the tire undergoes a color change at a temperature lower or higher than the color change temperature range of the temperature-sensitive pigment, there is a problem that the color change temperature is significantly lower or higher than the temperature range in which the damage of the tire begins to occur, and thus denaturation of the tire cannot be easily prevented effectively. Therefore, it is preferable to use a temperature-sensitive pigment having a color change temperature within the above-described range, in consideration of the purpose of providing information on the tire condition through the color change of the tire, and of the economic efficiency in the manufacture of the tire.

Preferably, the temperature-sensitive pigment include one or more selected from the group consisting of a low-temperature-sensitive pigment having a color change temperature in the range of -5°C to 20°C, an ambient-temperature-sensitive pigment having a color change temperature in the range of 20°C to 30°C, and a high-temperature-sensitive pigment having a color change temperature in the range of 30°C to 50°C.

The low-temperature-sensitive pigment has a color change temperature in the range of -5°C to 20°C, and in a case in which the external environment of the tire is at a low temperature, the pigment can detect the temperature through color change. The ambient-temperature-sensitive pigment has a color change temperature in the range of 2°C to 30°C, and the pigment is maintained in a state of having undergone a color change at normal temperature and can detect the temperature by undergoing a color change to the original color or to another color in a case in which the external environment reaches a low temperature or a high temperature. However, in this case, it is preferable that the ambient-temperature-sensitive pigment is a reversible temperature-sensitive pigment. Furthermore, the high-temperature-sensitive pigment has a color change temperature in the range of 30°C to 50°C, and in a case in which the external environment reaches a high temperature, the pigment can detect this through color change.

The light-sensitive pigment is a pigment that undergoes a color change depending on the intensity of light or the wavelength of light and means a pigment that undergoes a color change caused by light such as ultraviolet rays, visible light, or infrared rays. According to the present invention, the light-sensitive pigment is preferably an ultraviolet-sensitive pigment that undergoes a color change in response to ultraviolet rays.

Accordingly, maintenance of tires can be facilitated by allowing easy detection of ultraviolet rays, which reach the ground in the sunlight and most significantly affect the damage of tires, with naked eyes.

Regarding the light-sensitive pigment, similarly to the above-mentioned temperature-sensitive pigment, reversible and irreversible light-sensitive pigments can be used, and preferably, a reversible light-sensitive pigment can be used.

The photoluminescent pigment is a pigment that emits light in the dark and means a pigment that is commonly called luminous pigment. Rather than responding to light, the photoluminescent pigment absorbs and stores energy when exposed to light and emits light in a dark environment. The present invention makes it possible to recognize an environment in which light is weak or absent, with naked eyes by including the above-described photoluminescent pigment.

Since the present invention includes a pigment mixture such as described above, the present invention can check a color change in the tire according to a change in temperature or a change in light with naked eyes and can instantaneously provide information on the external environment of a tire to the user, and through this, the present invention has an effect that damage or functional deterioration of a tire can be recognized in advance, and the occurrence of safety accidents can be prevented.

Furthermore, since the information on the external environment of a tire can be instantaneously recognized with naked eyes, it is made easier to store the tire in an environment with appropriate temperature and light.

According to an embodiment of the present invention, the pigment mixture can include a first pigment and a second pigment selected from the group consisting of a temperature-sensitive pigment, a light-sensitive pigment, and a photoluminescent pigment, and the first pigment and the second pigment can be each included at a proportion of 25% to 75% by weight based on the total weight of the pigment mixture.

The first pigment and the second pigment mean pigments of different kinds, and in a case in which two different kinds of pigments are included, there is an advantage that various types of information on the change in the external environment according to the color change of a tire can be provided. Particularly, in such a case, it is preferable that the first pigment and the second pigment acquire colors that are different from each other after color change. This is because it is intended to prevent the information indicated by the changed colors from causing confusion.

In a case in which the pigments are included in an amount smaller than the above-described content, there is a problem that a color change of the pigment mixture does not occur sufficiently, and in a case in which the pigments are added in an excess amount compared to the above-described content, there is a problem that the amount of addition of the pigment is excessive compared to the color development power, while the production efficiency for tire is poor.

The present invention particularly has a feature of the invention that the first pigment and the second pigment that undergo color changes according to different environments constitute a single color-changing part and still exhibit excellent color development power at the time of color change, so that the users can recognize the changes in the external environment caused by various factors, all at the same time with naked eyes.

Furthermore, according to another embodiment of the present invention, the pigment mixture can include all of a temperature-sensitive pigment, a light-sensitive pigment, and a photoluminescent pigment. These three different pigments may be optionally referred to as first pigment, second pigment, and third pigment, and the first pigment, the second pigment, and the third pigment can be each included at a proportion of 25% to 45% by weight based on the total weight of the pigment mixture.

Similar to the case in which the pigment mixture includes the first pigment and the second pigment, in a case in which the pigment mixture includes three different kinds of pigments, there is an advantage that more various types information on the changes in the external environment according to the color change of the tire can be provided. Likewise, it is preferable that the colors acquired by the three pigments after color change are different from one another, in order to prevent the various types of information from causing confusion.

In a case in which the pigments are added in an amount smaller than the above-described content, there is a problem that color change of the pigment mixture does not sufficiently occur, and in a case in which the pigments are added in an excess amount compared to the above-described content, there is a problem that the content of other pigments becomes smaller, and the color development power of other pigments at the time of color change may be deteriorated.

When a temperature-sensitive pigment, a light-sensitive pigment, and a photoluminescent pigment are all included at predetermined contents as described above, it is advantageous that temperature changes and light changes can be effectively recognized with naked eyes.

Since it is an object of the present invention to make any change in the external environment of a tire and the information on the state of the tire instantaneously recognizable with naked eyes, and to facilitate the storage and maintenance of the tire, the present invention is configured to include a color-changing part comprising the above-described pigment mixture in one or more of the tread part, the sidewall part, and the spoke part of a tire so that the user can directly check color changes with naked eyes.

The color-changing part may be formed as the entire body or a portion of one or more of the tread part, the sidewall part, and the spoke part and may be formed on the surface of one or more of the tread part, the sidewall part, and the spoke part.

The tread part is a portion that comes into contact with the road surface and is composed of a thick rubber layer, while the sidewall part is the latera surface portion of a tire. The two portions are portions observed from the outside of a tire. The spoke part is a portion that absorbs the shock generated by the road surface in a non-pneumatic tire.

The color-changing part according to the present invention further includes a rubber composition for a tire in addition to the pigment mixture, and in this case, the color-changing part may be included in the entirety or a portion of the main body of one or more of the tread part, the sidewall part, and the spoke part.

In a case in which the color-changing part further includes a rubber composition for a tire, the color-changing part can include the pigment mixture at a proportion of 1.0% to 5.0% by weight based on the total weight of the color-changing part.

In a case in which the pigment mixture is added in an amount smaller than the above-described content, the color development power at the time of color change of the color-changing part resulting from a change in the external environment is decreased, and the desired color development may not occur. In a case in which the pigment mixture is added in an excess amount compared to the above-described content, the physical properties of the rubber composition including the pigment mixture may be changed (particularly, the rigidity of the compound is decreased) to become unsuitable to be used for the tread or the sidewall, or the physical properties of the material used in the spoke are deteriorated. Therefore, when the pigment mixture is added at the above-described content, it is suitable to express the desired performance.

On the other hand, in a case in which the color-changing part is formed on the surface of one or more of the tread part, the sidewall part, and the spoke part, the color-changing part can be formed by applying an ink composition including the pigment mixture on the tire surface, or attaching a sticker, a film, a sheet, a tape, and the like, all including the pigment mixture.

In the case of the method of using the above-mentioned ink composition, a composition having any physical properties can be used without limitation as long as the method is capable of applying the ink composition including the pigment mixture, and various coating methods can be used.

In the case of the method of attaching the above-mentioned adhesive material, a sticker, a film, a sheet, a tape, and the like, all including the pigment mixture, may be produced and attached to one or more of the tread part, the sidewall part, and the spoke part. The material of the color-changing part may be configured to have adhesiveness per se; however, any method by which the color-changing part can be attached to the surface, such as a method of applying an adhesive to the material of the color-changing part immediately before attaching to a tire, and attaching the material, can be used.

In a case in which the color-changing part is formed on the surface of one or more of the tread part, the sidewall part, and the spoke part, a color development auxiliary agent for assisting color development of the color-changing part can be used. A color development auxiliary agent comprises a white pigment such as titanium oxide (TiO2), zinc oxide (ZnO), or calcium carbonate (CaCO3), and plays the role of enhancing the color visibility of the color-changing part when applied on the lower surface of the color-changing part.

On the other hand, the tire of the present invention may be applied to pneumatic tires and non-pneumatic tires, and more particularly, the tire may be used as a tire for a passenger car, a racing tire, an airplane tire, a tire for an agricultural machine, an off-theroad tire, a truck tire, or a bus tire, according to the use application. Furthermore, the tire can be a radial tire or a bias tire.

Hereinafter, Examples of the present invention will be described in detail so that those having ordinary skill in the technical field to which the present invention is pertained can easily carry out the invention; however, these Examples are only for illustrative purposes, and the scope of the present invention is not intended to be limited to the following matters.

### Production Example

Pigment mixtures were produced according to the following Table 1 to Table 5 using a temperature-sensitive pigment (X1, Thermochromic Pigment, color change temperature: 10°C, 40°C, color acquired after color change: blue (low temperature), red (high temperature)), an ultraviolet-sensitive pigment (X2, D-S Photochromic Pigment, color acquired after color change: yellow), and a photoluminescent pigment (X3, Luminescent Pigment, color acquired color change: green), and stickers were produced using the pigment mixtures thus produced.

### Experiment Example 1: Experiment for checking color change of single factor

The stickers thus produced were attached to tires, and different specimens were respectively subjected to a temperature change (normal temperature → 10°C → 40°C), ultraviolet irradiation (infrared irradiation → ultraviolet irradiation), and light change (lighting followed by lights-out), and then color changes resulting therefrom were observed with naked eyes. The results are presented in the following Table 1.

**Table 1]**

| Mixing ratio (wt%) | Response to temperature | Response to ultraviolet rays | Response to light |
|---|---|---|---|
| X1-X2-X3 | | | |
| 100-0-0 | O | X | X |
| 0-100-0 | X | O | X |
| 0-0-100 | X | X | O |

| | | | |
|---|---|---|---|
| (O: Satisfactory, △: Weak, X: No response) | | | |

### Experiment Example 2: Experiment for checking color change of compound factors

Under the same conditions as in Experiment Example 1, various specimens were subjected to any two or more changes in sequence among a temperature change, ultraviolet irradiation, and light change, and color changes resulting therefrom were observed with naked eyes. The results are presented in the following Table 2 to Table 5.

**[Table 2]**

| Mixing ratio (wt%) | Response to temperature | Response to ultraviolet rays |
|---|---|---|
| X1-X2 | | |
| 90-10 | O | X |
| 80-20 | O | X |
| 70-30 | O | Δ |
| 60-40 | O | Δ |
| 50-50 | O | O |
| 40-60 | △ | O |
| 30-70 | △ | O |
| 20-80 | X | O |
| 10-90 | X | O |

| | | |
|---|---|---|
| (O: Satisfactory, △: Weak, X: No response) | | |

**[Table 3]**

| Mixing ratio (wt%) | Response to temperature | Response to light |
|---|---|---|
| X1-X3 | | |
| 90-10 | O | X |
| 80-20 | O | X |
| 70-30 | O | Δ |
| 60-40 | O | Δ |
| 50-50 | O | O |
| 40-60 | Δ | O |
| 30-70 | Δ | O |
| 20-80 | X | O |
| 10-90 | X | O |

| | | |
|---|---|---|
| (O: Satisfactory, △: Weak, X: No response) | | |

**[Table 4]**

| Mixing ratio (wt%) | Response to ultraviolet rays | Response to light |
|---|---|---|
| X2-X3 | | |
| 90-10 | O | X |
| 80-20 | O | X |
| 70-30 | O | Δ |
| 60-40 | O | Δ |
| 50-50 | O | O |
| 40-60 | Δ | O |
| 30-70 | Δ | O |
| 20-80 | X | O |
| 10-90 | X | O |

| | | |
|---|---|---|
| (O: Satisfactory, △: Weak, X: No response) | | |

**Table 5]**

| Mixing ratio (wt%) | Response to temperature | Response to ultraviolet rays | Response to light |
|---|---|---|---|
| X1-X2-X3 | | | |
| 80-10-10 | O | X | X |
| 70-15-15 | O | X | X |
| 60-20-20 | O | X | X |
| 50-25-25 | O | X | X |
| 40-30-30 | Δ | Δ | Δ |
| 30-35-35 | Δ | Δ | Δ |
| 20-40-40 | X | Δ | Δ |
| 10-45-45 | X | O | O |

| | | | |
|---|---|---|---|
| (O: Satisfactory, △: Weak, X: No response) | | | |

As can be seen from Table 1, the presence or absence of color change for each of the color change factors can be checked. These were considered as control groups for Experimental Example 2, and color changes were checked.

As can be seen from Table 2 to Table 4, in the case of a pigment mixture obtained by mixing two among X1 to X3, when the content of the individual pigment was 30% by weight or more, color change could be checked even at a level of weak response. From this, it can be verified, similarly to the present Experimental Example, that in a case in which the pigments have different colors acquired after color change, it is possible to recognize the factors inducing color change with naked eyes even if color change occurs to a weak extent.

As can be seen from Table 5, in a case in which the contents of the individual pigments are 30% by weight or more, since the pigment mixtures all exhibit color change response to temperature, ultraviolet rays, and light, the user can recognize more various kinds of information on the external environment by checking color changes with naked eyes.

In the following description, a tire according to the present invention will be described in more detail based on the drawings. However, this is simply one Example for allowing the present invention to be easily understood, and the scope of the present invention is not limited to this.

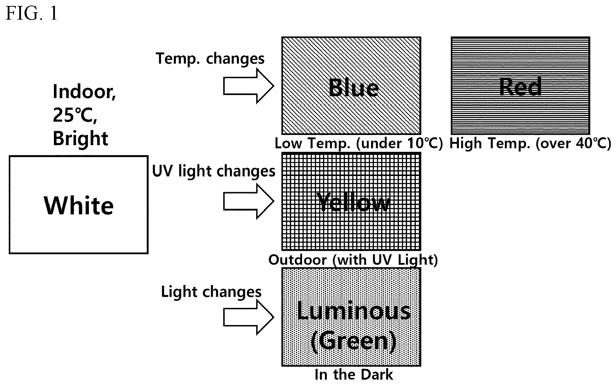

FIG. 1 is a schematic diagram showing the experimental results obtained according to changes in temperature, ultraviolet rays, and light in a sticker specimen produced using a pigment mixture in which the mixing ratio of a temperature-sensitive pigment, an ultraviolet-sensitive pigment, and a photoluminescent pigment is 30:35:35 (wt%) .

When FIG. 1 is referred to, in a state in which the pigment mixture is applied, the sticker specimen shows the same color as the color of the lower surface of the base material where the pigment mixture is applied, or the sticker specimen exhibits the color of a pigment that is optionally added as necessary.

In FIG. 1, an experiment was carried out by applying the pigment mixture on the surface of a white base material so as to make the recognition of color change easier.

In a case in which the ambient temperature (sticker temperature) was set to a temperature lower than normal temperature (25°C), such as 10°C or lower, color change to blue color was exhibited, and in a case in which the ambient temperature (sticker temperature) was set to a high temperature such as 40°C or higher, color change to red color was exhibited.

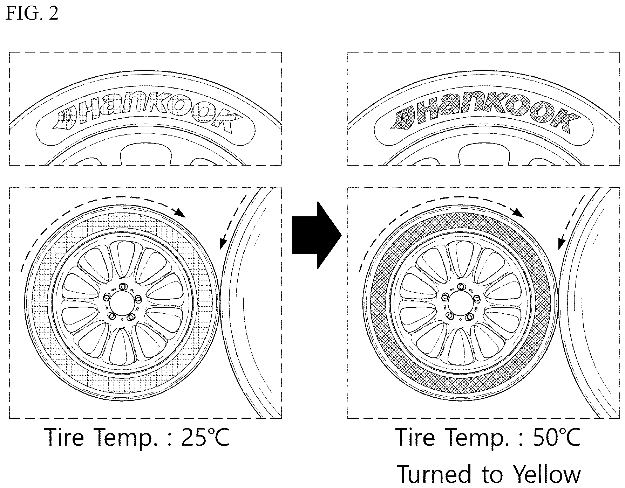

FIG. 2 is a schematic diagram showing a color change obtained as a result of a change in the external temperature of a tire according to an embodiment of the present invention.

As can be seen from FIG. 2, the effect of color change according to a change in the external environment as shown in FIG. 1 can be directly applied to a tire, and the presence or absence of color change according to a temperature change can be verified.

Specifically, the tire at normal temperature (25°C) maintains, as shown in FIG. 1, the color development according to the color of an additive pigment or the base material. When the temperature of the external environment or the temperature of the tire increases to about 50°C, the color of the color-changing part changes to yellow.

Accordingly, an effect that the change in the ambient temperature of the tire can be directly recognized through the color change in the tire is obtained.

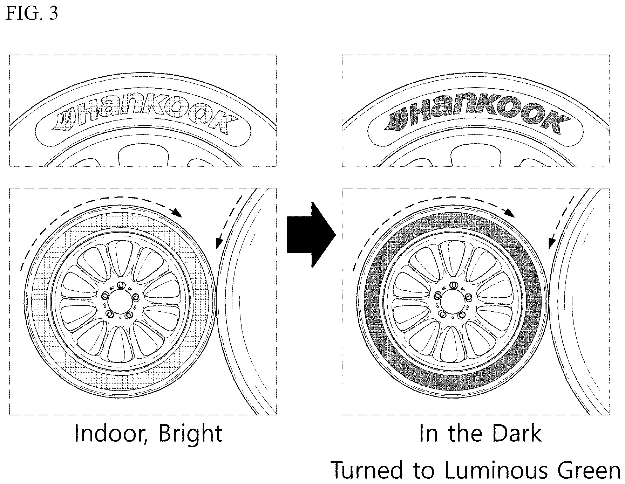

FIG. 3 is a schematic diagram showing a color change obtained as a result of a change in the external light (darkness) of a tire according to another embodiment of the present invention.

As can be seen from FIG. 3, the effect of color change according to a change in the external environment as shown in FIG. 1 can be directly applied to a tire, and the presence or absence of color change according to a change in the external lighting can be verified.

Specifically, under the bright indoor conditions, the color development according to the color of an additive pigment or the base material is maintained. When the external environment is changed to dark conditions, the color of the color-changing part changes to fluorescent green.

Accordingly, an effect that the change in the ambient light of the tire can be directly recognized through the color change in the tire is obtained.

As can be seen from FIG. 2 and FIG. 3, even in a tire that is in a parked state and a tire that is rotating during car driving, the color-changing part is observed in a ring shape that is formed by rotation of the color-changing part, and the presence or absence of color change (temperature change) can be verified.

However, the colors at the time of color change as described above can be varied depending on the temperature-sensitive pigment, the ultraviolet-sensitive pigment, and the light-sensitive pigment, and any pigment that can exhibit color change according to a change in the external environment when applied to the tire of the present invention, can be used without any limitation in the color acquired after color change.

## Claims

1. A tire comprising a pigment mixture capable of undergoing a color change with a change in temperature and/or light,
wherein one or more of a tread part, a sidewall part, and a spoke part of the tire include a color-changing part comprising the pigment mixture,
**characterized in that** the pigment mixture includes a first pigment, a second pigment, and a third pigment selected from the group consisting of a temperature-sensitive pigment, a light-sensitive pigment, and a photoluminescent pigment,
the first pigment, the second pigment, and the third pigment have different colors acquired after color change,
the pigment mixture includes the first pigment at a proportion of 25% to 45% by weight, the second pigment at a proportion of 25% to 45% by weight, and the third pigment at a proportion of 25% to 45% by weight, based on the total weight of the pigment mixture,
wherein the pigment mixture is included in the color-changing part at a proportion of 1.0% to 5.0% by weight based on the total weight of the color-changing part, and
wherein the light-sensitive pigment is a pigment that undergoes a color change depending on the intensity of light or the wavelength of light and means a pigment that undergoes a color change caused by light such as ultraviolet rays, visible light, or infrared rays.

2. The tire according to claim 1, wherein the color-changing part further includes a rubber composition for a tire and
the color-changing part is included in the entirety or a portion of the main body of one or more of the tread part, the sidewall part, and the spoke part.

3. The tire according to claim 1, wherein the color-changing part is formed on the surface of one or more of the tread part, the sidewall part, and the spoke part, and
the color-changing part is formed by applying an ink composition including the pigment mixture.

4. The tire according to claim 1, wherein the color-changing part is formed on the surface of one or more of the tread part, the sidewall part, and the spoke part, and
the color-changing part is formed by sticking any one selected from the group consisting of a sticker, a film, a sheet, and a tape, all of which includes the pigment mixture.

5. The tire according to claim 1, wherein the tire is either a pneumatic tire or a non-pneumatic tire.

## Patentansprüche

1. Bereifung mit einer Pigmentmischung, die dazu eingerichtet ist, bei einem Wechsel in der Temperatur und/oder bei einem Strahlungseinfall einem Farbwechsel zu unterliegen,
wobei wenigstens ein Laufflächenbereich, ein Seitenwandbereich oder ein Speichenbereich der Bereifung einen Farbwechselbereich aufweisen, der die Pigmentmischung enthält,
**dadurch gezeichnet,** dass die Pigmentmischung ein erstes Pigment, ein zweites Pigment und ein drittes Pigment umfasst, die aus der Gruppe bestehend aus einem temperaturempfindlichen Segment, einem strahlungsempfindlichen Segment und einem photolumineszierenden Pigment ausgewählt sind,
dass das erste Pigment, das zweite Pigment und das dritte Pigment nach einem Farbwechsel verschiedene Farben angenommen haben,
dass die Pigmentmischung das erste Pigment mit einem Anteil von 25 Gew% bis 45 Gew% an Gewicht, das zweite Pigment mit einem Anteil von 25 Gew% bis 45 Gew% und das dritte Pigment mit einem Anteil von 25 Gew% bis Gew45% bezogen auf das Gesamtgewicht der Pigmentmischung aufweist,
wobei die Pigmentmischung in dem Farbwechselbereich mit einem Anteil an 1,0 Gew% bis 5,0 Gew% bezogen auf das Gesamtgewicht des Farbwechselbereichs umfasst ist und
wobei das strahlungsempfindliche Pigment ein Pigment ist, das in Abhängigkeit der Intensität der Strahlung oder der Wellenlänge der Strahlung einem Farbwechsel unterliegt und ein Pigment darstellt, das bei einem durch Strahlung wie ultraviolette Strahlung, sichtbarem Licht oder infraroter Strahlung verursachten Farbwechsel unterliegt.

2. Bereifung nach Anspruch 1, bei dem der Farbwechselbereich weiterhin eine Gummizusammensetzung für eine Bereifung umfasst und
bei dem der Farbwechselbereich von der Gesamtheit oder einem Bereich des Hauptkörpers von wenigstens dem Laufflächenbereich, dem Seitenwandbereich oder dem Speichenbereich umfasst ist.

3. Bereifung nach Anspruch 1, bei der der Farbwechselbereich an der Oberfläche wenigstens des Laufflächenbereichs, des Seitenwandbereichs oder des Speichenbereichs ausgebildet ist und
wobei der Farbwechselbereich durch Zusetzen einer die Pigmentmischung beinhaltenden Farbstoffzusammensetzung ausgebildet ist.

4. Bereifung nach Anspruch 1, bei der der Farbwechselbereich auf der Oberfläche wenigstens des Laufflächenbereichs, des Seitenwandbereichs oder des Speichenbereichs ausgebildet ist und
wobei der Farbwechselbereich durch Aufkleben eines aus der Gruppe bestehend aus einem Aufkleber, einem Film, einer Schicht und eines Klebebands, die jeweils die Pigmentmischung aufweisen, ausgewählten Elements gebildet ist.

5. Bereifung nach Anspruch 1, wobei die Bereifung entweder eine Luftbereifung oder eine luftfreie Bereifung ist.

## Revendications

1. Pneumatique comprenant un mélange de pigments capable de subir un changement de couleur avec un changement de température et/ou de lumière,
dans lequel une ou plusieurs parties parmi une partie de bande de roulement, une partie de flanc et une partie de rayon du pneumatique comprennent une partie changeant de couleur comprenant le mélange de pigments,
**caractérisé en ce que** le mélange de pigments comprend un premier pigment, un deuxième pigment, et un troisième pigment sélectionné dans le groupe constitué d'un pigment sensible à la température, d'un pigment photosensible, et d'un pigment photoluminescent,
le premier pigment, le deuxième pigment et le troisième pigment ont des couleurs différentes acquises après un changement de couleur,
le mélange de pigments comprend le premier pigment dans une proportion de 25% à 45% en poids, le deuxième pigment dans une proportion de 25% à 45% en poids, et le troisième pigment dans une proportion de 25% à 45% en poids, sur la base du poids total du mélange de pigments,
dans lequel le mélange de pigments est inclus dans la partie changeant de couleur dans une proportion de 1,0% à 5,0% en poids sur la base du poids total de la partie de changement de couleur, et
dans lequel le pigment photosensible est un pigment qui subit un changement de couleur en fonction de l'intensité de la lumière ou de la longueur d'onde de la lumière et désigne un pigment qui subit un changement de couleur provoqué par la lumière telle que les rayons ultraviolets, la lumière visible ou les rayons infrarouges.

2. Pneumatique selon la revendication 1, dans lequel la partie changeant de couleur comprend en outre une composition de caoutchouc pour un pneumatique et
la partie changeant de couleur est incluse dans la totalité ou une partie du corps principal d'une ou de plusieurs parties parmi la partie de bande de roulement, la partie de flanc et la partie de rayon.

3. Pneumatique selon la revendication 1, dans lequel la partie changeant de couleur est formée sur la surface d'une ou plusieurs parties parmi la partie de bande de roulement, la partie de flanc et la partie de rayon, et
la partie changeant de couleur est formée par application d'une composition d'encre comprenant le mélange de pigments.

4. Pneumatique selon la revendication 1, dans lequel la partie changeant de couleur est formée sur la surface d'une ou plusieurs parties parmi la partie de bande de roulement, la partie de flanc et la partie de rayon, et
la partie changeant de couleur est formée par collage de l'un quelconque sélectionné dans le groupe constitué d'un autocollant, d'un film, d'une feuille et d'un ruban, le tout comprenant le mélange de pigments.

5. Pneumatique selon la revendication 1, dans lequel le pneumatique est soit un bandage pneumatique, soit un bandage non pneumatique.
